# EUROPÄISCHE PATENTSCHRIFT

(11) **EP 1 783 719 B1**
(45) Veröffentlichungstag und Bekanntmachung des Hinweises auf die Patenterteilung: **17.12.2008**
(21) Anmeldenummer: 06120228.9
(22) Anmeldetag: 06.09.2006
(51) Int. Cl.: G08G 1/16, B60W 30/12

(54) **Einrichtung und Verfahren zur Warnung eines Fahrers eines Kraftfahrzeugs vor Verlassen einer Fahrspur**
Device and method for warning a driver of a vehicle about leaving a lane
Dispositif et procédé destinés à l'alerte d'un conducteur de véhicule automobile avant la sortie d'une voie de circulation

(30) Priorität: 02.11.2005 DE 102005052177
(43) Veröffentlichungstag der Anmeldung: 09.05.2007
(73) Patentinhaber: ROBERT BOSCH GMBH, 70442 Stuttgart (DE)
(72) Erfinder: Niehsen, Wolfgang, 31162 Bad Salzdetfurth (DE); Abraham, Steffen, 31134 Hildesheim (DE)

(56) Entgegenhaltungen:
- WO-A-03/076250
- WO-A-20/06037445
- US-B1- 6 370 475

## Beschreibung

Die Erfindung betrifft eine Einrichtung und ein Verfahren zur Warnung eines Fahrers eines Kraftfahrzeugs vor Verlassen einer Fahrspur, wobei mindestens eine Videokamera auf die Fahrspur gerichtet ist und eine Bildverarbeitungseinrichtung Ränder der Fahrspur erkennt, Änderungen der Lage und/oder der relativen Bewegung der Ränder auswertet und bei Überschreiten vorgegebener Grenzwerte ein Warnsignal erzeugt.

### Stand der Technik

Einrichtungen nach der Gattung des Hauptanspruchs werden auch video-basierte Systeme zur Fahrspurverlassenswarnung oder im Englischen lane departure warning (LDW) systems genannt. Üblicherweise erfolgt eine monokulare Bildaufnahme, also keine stereoskopische, wobei eine euklidische 3D-Repräsentation des Fahrzeugumfeldes bzw. des Raumes vor dem Kraftfahrzeug berechnet wird. Dazu sind zuverlässige und hinreichend genaue Informationen über die Position, die Orientierung und Parameter der Kamera, welche üblichen Fertigungsstreuungen unterliegen, Voraussetzung.

Diese Informationen können durch eine geeignete Kalibrierung ermittelt werden, beispielsweise durch in DE 101 15 043 A1, DE 102 46 067 A1 und DE 199 62 997 A1 beschriebene Verfahren. Solche Kalibrierung in der Fertigung und nach Wartungsarbeiten und gegebenenfalls bei sich ändernden Einstellungen auch im Betrieb stellen jedoch einen nicht unerheblichen Kostenfaktor dar.

In der WO 03/076250 wird ein Querführungssystem beschrieben (Lane keeping support system), welches individuellen Wünschen und Vorlieben des Fahrers Rechnung trägt. So können Schwell- und Grenzwerte über manuelle Eingabe des Fahrers festgelegt werden, die beispielsweise eine bestimmte Abweichung von der Spurmitte zulassen.

### Vorteile der Erfindung

Aufgabe der vorliegenden Erfindung ist es, eine Einrichtung und ein Verfahren zur Warnung eines Fahrers vor Verlassen einer Fahrspur vorzuschlagen, die kostengünstig sind und dennoch effektiv arbeiten.

Diese Aufgabe wird bei der erfindungsgemäßen Einrichtung mit dem im kennzeichnenden Teil des Anspruchs 1 angegebenen Merkmal gelöst.

Die erfindungsgemäße Einrichtung hat den Vorteil, dass eine genaue Kalibrierung der Videokamera nicht erforderlich ist und dass die Grenzwerte für eine Warnung individuell festlegbar sind. Damit kann in einfacher Weise verhindert werden, dass eine Warnung erst zu spät erfolgt, was dem Sinn einer Warnung widerspricht, oder zu früh, wodurch der Fahrer durch häufige unnötige Warnungen irritiert werden würde. Die Kalibrierfahrt wird vorzugsweise von demjenigen Fahrer vorgenommen, der auch das Kraftfahrzeug benutzt. Vorzugsweise wird die Kalibrierfahrt auf einer Straße mit geringem Verkehr und einwandfreien Fahrbahnmarkierungen vorgenommen. Eine Kalibrierung durch einen Händler oder bereits beim Hersteller ist jedoch nicht ausgeschlossen.

Für den Fall, dass ein Kraftfahrzeug von mehreren Fahrern benutzt wird, kann bei der erfindungsgemäßen Einrichtung vorgesehen sein, dass Grenzwerte für mehrere Fahrer ablegbar und abrufbar sind. Diese Ausgestaltung der erfindungsgemäßen Einrichtung kann auch mit anderen fahrerindividuellen Systemen verbunden sein, wie beispielsweise mit der Sitz- und Lenkradverstellung.

Gemäß einer anderen vorteilhaften Ausgestaltung der erfindungsgemäßen Einrichtung ist vorgesehen, dass das Eingabe-Element eine Taste ist. Eine solche Taste kann beispielsweise am Lenkrad angeordnet sein oder von einer ohnehin am Lenkrad vorhandenen Taste, beispielsweise zur Bedienung des Radios, durch Umschaltung realisiert werden, wenn die erfindungsgemäße Einrichtung in den Kalibriermodus geschaltet wird.

Erfindungsgemäß ist das Eingabe-Element ein Detektor für die Drehrichtung des Lenkrades .

Bei dem erfindungsgemäßen Verfahren wird die Aufgabe mit der im kennzeichnenden Teil des Anspruchs 4 angegebenen Maßnahme gelöst.

Zur Kalibrierung befährt der Fahrer eine Straße mit möglichst geringem Verkehr und guten Fahrbahnmarkierungen, wobei er sich zwischen den durch die Fahrbahnmarkierungen gegebenen Grenzen mit seinem Kraftfahrzeug bewegt und jeweils das Eingabe-Element betätigt, wenn er meint, gewarnt werden zu müssen.

Erfindungsgemäß werden die Daten gespeichert die bei einer Drehrichtungsumkehr des Lenkrades vorliegen. Hierbei braucht der Fahrer kein zusätzliches Eingabe-Element zu betätigen, sondern benutzt das Lenkrad als Eingabe-Element, indem er bei drohendem Spurverlassen bzw. bei Annäherung an eine der Fahrbahnmarkierungen das Kraftfahrzeug wieder in Richtung auf die Fahrbahnmitte lenkt.

Eine andere Weiterbildung des erfindungsgemäßen Verfahrens besteht darin, dass aus zu mehreren Zeitpunkten während einer Kalibrierfahrt gewonnenen Grenzwerten je Fahrspurseite ein Mittelwert berechnet wird, wobei Werte mit großer Abweichung nicht berücksichtigt werden. Dadurch können Fehleingaben während der Kalibrierfahrt weitgehend unwirksam gemacht werden.

Eine vorteilhafte Anwendung des erfindungsgemäßen Verfahrens bei Fahrzeugen, die von mehreren Fahrern benutzt werden, wird dadurch ermöglicht, dass Kalibrierfahrten mit verschiedenen Fahrern durchgeführt werden, dass die jeweils gewonnenen Grenzwerte getrennt nach Fahrern gespeichert werden und dass bei Fahrten die für den jeweiligen Fahrer gespeicherten Grenzwerte zur Erzeugung des Warnsignals benutzt werden.

### Zeichnung

Ausführungsbeispiele der Erfindung sind in der Zeichnung anhand mehrerer Figuren dargestellt und in der nachfolgenden Beschreibung näher erläutert. Es zeigt:
Fig. 1 einen Teil einer Kalibrierfahrt,
Fig. 2 ein Blockschaltbild einer erfindungsgemäßen Einrichtung und
Fig. 3 ein Blockschaltbild einer weiteren erfindungsgemäßen Einrichtung.

### Beschreibung der Ausführungsbeispiele

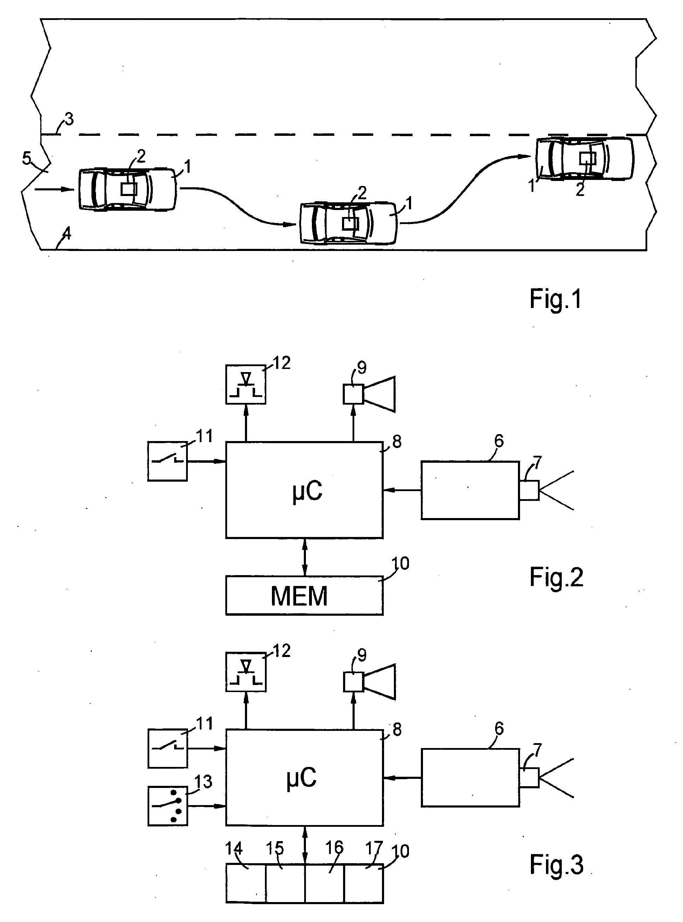

Bei der in Fig. 1 dargestellten Kalibrierfahrt fährt ein Kraftfahrzeug 1 mit einer lediglich angedeuteten erfindungsgemäßen Einrichtung 2 auf einer durch Markierungen 3, 4 begrenzten Fahrspur 5. Der Fahrer steuert das Kraftfahrzeug 1 abwechselnd an den rechten und linken Rand der Fahrspur 5 und betätigt jeweils eine Taste am Lenkrad, wenn er eine Warnung für sinnvoll ansieht.

Die in Fig. 2 schematisch dargestellte erfindungsgemäße Einrichtung besteht aus einer Videokamera 6 mit einem Objektiv 7. Die von der Videokamera 6 erzeugten Videosignale werden einem Mikrocomputersystem 8, das unter anderem Programme zur Bildverarbeitung enthält, zugeleitet und dort ausgewertet. Bei Überschreiten vorgegebener Grenzwerte bezüglich der Lage oder der relativen Bewegung der Ränder, das heißt der Fahrbahnmarkierungen 3, 4 (Fig. 1), wird ein Signalgeber 9 aktiviert. Zur Durchführung einer Kalibrierfahrt wird mit Hilfe eines Eingabe-Elements 11 ein Kalibriermodus aktiviert. Während der Fahrt bedient der Fahrer ein weiteres Eingabe-Element 12, wenn er sich mit dem Kraftfahrzeug 1 an den Rand der Fahrspur bewegt. Die dann vom Mikrocomputersystem 8 aus den Videosignalen gewonnenen, für die Warnung relevanten Daten werden im Speicher 10 abgelegt und bei den folgenden normalen Fahrten als Grenzwerte zu Warnungen verwendet.

Fig. 3 zeigt ein weiteres Ausführungsbeispiel, bei welchem ein drittes Eingabe-Element 13 als Wahlschalter ausgebildet ist, mit welchem einer der vorgesehenen Fahrer eingestellt werden kann. Diese Einstellung kann bei einer Kalibrierfahrt mit dem jeweiligen Fahrer und auch bei einer normalen Fahrt verwendet werden. Bei der Kalibrierfahrt werden die jeweils gewonnenen Grenzwerte in Teilbereiche 14 bis 17 des Speichers 10 eingeschrieben und bei einer normalen Fahrt in Abhängigkeit von der Stellung des Schalters 13 aus dem jeweiligen Teilbereich 14 bis 17 ausgelesen.

## Patentansprüche

1. Einrichtung zur Warnung eines Fahrers eines Kraftfahrzeugs vor Verlassen einer Fahrspur, wobei mindestens eine Videokamera (6) auf die Fahrspur (5) gerichtet ist und eine Bildverarbeitungseinrichtung (8) Ränder (3, 4) der Fahrspur (5) erkennt, Änderungen der Lage und/oder der relativen Bewegung der Ränder (3, 4) auswertet und bei Überschreiten vorgegebener Grenzwerte ein Warnsignal erzeugt, wobei ein Speicher (10) für Grenzwerte, die zuvor bei einer Kalibrierfahrt durch Eingabe des Fahrers ermittelt wurden, vorgesehen ist und dass zur Eingabe bei der Kalibrierfahrt ein Eingabe-Element (12) dient, **dadurch gekennzeichnet, dass** das Eingabe-Element ein Detektor für die Drehrichtung des Lenkrades ist.

2. Einrichtung nach Anspruch 1, **dadurch gekennzeichnet, dass** Grenzwerte für mehrere Fahrer ablegbar und abrufbar sind.

3. Einrichtung nach einem der Ansprüche 1 oder 2, **dadurch gekennzeichnet, dass** das Eingabe-Element eine Taste (12) ist.

4. Verfahren zum Kalibrieren einer Einrichtung zur Warnung eines Fahrers eines Kraftfahrzeugs vor Verlassen einer Fahrspur, wobei mindestens eine Videokamera auf die Fahrspur gerichtet ist und eine Bildverarbeitungseinrichtung Ränder der Fahrspur erkennt, Änderungen der Lage und/oder der relativen Bewegung der Ränder auswertet und bei Überschreiten vorgegebener Grenzwerte ein Warnsignal erzeugt, wobei bei einer Fahrt auf einer geeigneten Fahrspur der Fahrer ein Eingabe-Element betätigt, wenn sich das Kraftfahrzeug einem Rand der Fahrspur nähert, und dabei durch die Auswertung der Lage und/oder relativen Bewegung der Ränder abgeleitete Daten als Grenzwerte gespeichert werden, **dadurch gekennzeichnet, dass** die Daten gespeichert werden, die bei einer Drehrichtungsumkehr des Lenkrades vorliegen.

5. Verfahren nach Anspruch 4, **dadurch gekennzeichnet, dass** aus zu mehreren Zeitpunkten während einer Kalibrierfahrt gewonnenen Grenzwerten je Fahrspurseite ein Mittelwert berechnet wird, wobei Werte mit großer Abweichung nicht berücksichtigt werden.

6. Verfahren nach einem der Ansprüche 4 oder 5, **dadurch gekennzeichnet, dass** Kalibrierfahrten mit verschiedenen Fahrern durchgeführt werden, dass die jeweils gewonnenen Grenzwerte getrennt nach Fahrern gespeichert werden und dass bei Fahrten die für den jeweiligen Fahrer gespeicherten Grenzwerte zur Erzeugung des Warnsignals benutzt werden.

## Claims

1. Device for warning a driver of a vehicle about leaving a lane, wherein at least one video camera (6) is directed at the lane (5), and an image-processing device (8) detects edges (3, 4) of the lane (5), changes in the position and/or the relative movement of the edges (3, 4) are evaluated, and when predefined limiting values are exceeded a warning signal is generated, wherein a memory (10) is provided for limiting values which have previously been determined during a calibration journey by inputting by the driver, and in that an input element (12) is used for the inputting during the calibration journey, **characterized in that** the input element is a detector for the direction of rotation of the steering wheel.

2. Device according to Claim 1, **characterized in that** limiting values can be stored and called for a plurality of drivers.

3. Device according to one of Claims 1 or 2, **characterized in that** the input element is a pushbutton key (12).

4. Method for calibrating a device for warning a driver of a vehicle about leaving a lane, wherein at least one video camera is directed at the lane, and an image-processing device detects edges of the lane, changes in the position and/or the relative movement of the edges are evaluated, and when predefined limiting values are exceeded a warning signal is generated, wherein during a journey on a suitable lane the driver activates an input element when the motor vehicle approaches an edge of the lane, and in the process data which are derived as a result of the evaluation of the position and/or relative movement of the edges are stored as limiting values, **characterized in that** the data which are present when there is a reversal of the direction of rotation of the steering wheel are stored.

5. Method according to Claim 4, **characterized in that** a mean value is calculated from limiting values for each side of the lane, said limiting values being acquired at a plurality of points in time during a calibration journey, wherein values with a large deviation are not taken into account.

6. Method according to one of Claims 4 or 5, **characterized in that** calibration journeys with different drivers are carried out, **in that** the respectively acquired limiting values are stored separately according to the drivers, and **in that** the limiting values which are stored for the respective driver are used to generate the warning signal during journeys.

## Revendications

1. Installation pour avertir le conducteur d'un véhicule automobile avant de quitter une voie de circulation, comportant au moins une caméra vidéo (6) dirigée vers la voie de circulation (5) et une installation de traitement d'image (8) reconnaissant les bords (3, 4) de la voie de circulation (5), exploitant les variations de position et/ou le mouvement relatif des bords (3, 4) et générant un signal avertisseur en cas de dépassement de valeurs limites prédéfinies,
une mémoire (10) étant prévue pour les valeurs limites qui ont été déterminées au préalable par un trajet de calibrage, par introduction faite par le conducteur et cette mémoire sert à entrer un élément d'entrée (12) lors du trajet de calibrage,
**caractérisée en ce que**
l'élément d'entrée est un détecteur du sens de rotation du volant de direction.

2. Installation selon la revendication 1,
**caractérisée en ce qu'**
elle contient l'enregistrement des valeurs limites pour plusieurs conducteurs et ces valeurs limites peuvent être appelées.

3. Installation selon la revendication 1 ou 2,
**caractérisée en ce que**
l'élément d'entrée est une touche (12).

4. Procédé de calibrage d'une installation pour avertir le conducteur d'un véhicule automobile avant de quitter une voie de circulation, au moins une caméra vidéo étant dirigée sur la voie de circulation et une installation de traitement d'image reconnaissant les bords de la voie de circulation, les variations de position et/ou le mouvement relatif des roues et en cas de dépassement de valeurs limites prédéfinies, on génère un signal avertisseur, et
lors d'un trajet sur sa voie de circulation, le conducteur actionne un élément d'entrée lorsque le véhicule se rapproche d'un bord de la voie de circulation et on déduit des données à partir de l'exploitation de la position et/ou du mouvement relatif des roues et ces données sont mémorisées comme valeurs limites,
**caractérisé en ce qu'**
on mémorise les données qui existent au moment du changement de sens de rotation du volant de direction ;

5. Procédé selon la revendication 4,
**caractérisé en ce qu'**
à partir des valeurs limites obtenues à plusieurs instants au cours d'un trajet de calibrage, on calcule une valeur moyenne pour chaque côté de la voie de circulation et on ne tient pas compte des valeurs correspondant au plus grand écart.

6. Procédé selon la revendication 4 ou 5,
**caractérisé en ce qu'**
on effectue le trajet de calibrage avec différents conducteurs et on mémorise séparément les valeurs limites respectivement obtenues pour chaque conducteur et pour les trajets, on utilise les valeurs limites mémorisées pour chaque conducteur pour générer le signal d'avertissement.
